# EUROPÄISCHE PATENTSCHRIFT

(11) **EP 2 041 632 B1**
(45) Veröffentlichungstag und Bekanntmachung des Hinweises auf die Patenterteilung: **02.05.2012**
(21) Anmeldenummer: 07765178.4
(22) Anmeldetag: 11.07.2007
(51) Int. Cl.: G05B 19/042

(54) **NEUPROGRAMMIERUNG VON ELEKTRONISCHEN FAHRZEUG-STEUEREINHEITEN ÜBER EINGEBAUTE PERIPHERIEN FÜR AUSTAUSCHBARE DATENSPEICHER**
REPROGRAMMING OF ELECTRONIC VEHICLE CONTROL UNITS USING INBUILT PERIPHERALS FOR INTERCHANGEABLE DATA STORES
REPROGRAMMATION D'UNITÉS ÉLECTRONIQUES DE COMMANDE DE VÉHICULES AU MOYEN DE PÉRIPHÉRIQUES INTÉGRÉS POUR ENREGISTREURS DE DONNÉES INTERCHANGEABLES

(30) Priorität: 11.07.2006 DE 102006032065
(43) Veröffentlichungstag der Anmeldung: 01.04.2009
(73) Patentinhaber: KNORR-BREMSE Systeme für Nutzfahrzeuge GmbH, 80809 München (DE)
(72) Erfinder: KOMLÓSI, Attila, H-1138 Budapest (HU)
(74) Vertreter: Schönmann, Kurt
(86) Internationale Anmeldenummer: PCT/EP2007/006160
(87) Internationale Veröffentlichungsnummer: WO 2008/006567

(56) Entgegenhaltungen:
- WO-A-03/105094
- FR-A1- 2 846 116
- US-A1- 2005 256 614
- US-B1- 6 823 247
- US-B1- 7 039 511

## Beschreibung

Die Erfindung betrifft eine Vorrichtung zum Neuprogrammieren einer elektronischen Steuereinheit eines Fahrzeugs nach dem Oberbegriff von Patentanspruch 1 sowie ein Verfahren für den Betrieb der Vorrichtung nach Patentanspruch 13.

Eine gattungsgemäße Vorrichtung ist aus der Druckschrift US 2004/6823247 B1. Demgemäß erfolgt eine Neuprogrammierung von elektronischen Steuereinheiten (ECUs) über ein Multimediagerät. Die in der genannten Druckschrift vorgeschlagene Lösung zur Aktualisierung des schnell wachsenden Umfangs von Software in elektronischen Steuereinheiten weist Nachteile dahingehend auf, dass die Handhabung oder Verwaltung der Aktualisierung von Softwaremodulen Aufgabe eines Multimediageräts ist, so dass dies eine beträchtliche Softwareunterstützung in der Steuereinrichtung des Multimediageräts erfordert, um ein diagnostisches Softwaremodul auszuführen. Dies ist jedoch keine der Aufgaben, für welche eine Navigationssystemeinheit bzw. ein Multimediagerät ausgelegt ist.

Ferner kann die Einrichtung einer diagnostischen Herunterladebetriebsart bzw. Downloadsession, die Prüfung des Fahrzeugzustands oder das Initiieren des Herunterlademodus sich in bereits nur zwei Fahrzeugen desselben Herstellers unterscheiden. Derartige Unterschiede müssen dann von dem Multimediagerät gehandhabt werden können.

Darüber hinaus kann es dann, wenn die während der Herstellung des Fahrzeugs in dieses eingebaute Multimediagerät auch das diagnostische Softwaremodul enthält, schwierig sein, denselben Typ von Multimediagerät mit unterschiedlichen diagnostischen Softwaremodulen zu handhaben. Falls das diagnostische Softwaremodul während der Produktion des Fahrzeugs in das Multimediagerät geladen wird, erfordert dies zusätzliche Zeit.

Ein weiterer Nachteil der bekannten Anordnungen besteht in einem beträchtlichen Unterschied dahingehend, dass die Kommunikationsnetzwerke, die zur normalen, funktionsbezogenen Kommunikation (beispielsweise einer Zusammenarbeit zweier elektronischer Steuereinheiten zur Durchführung einer Antischlupfregelung (ASR), einer Geschwindigkeitsregelung und so weiter) und zur diagnostischen Kommunikation verwendet werden, in dem Fahrzeug unabhängige (separate) Netzwerke mit unterschiedlichen physikalischen Schichten, Kommunikationspaketen und/oder Kommunikationsmeldungen und Protokollen sein können. Die Informationen zum Prüfen des Fahrzeugzustands, zum Senden von Meldungen an den Fahrer und so weiter können üblicherweise von dem normalen Zwischenverbindungsnetzwerk der elektronischen Steuereinheiten erfasst werden, das durch zum Beispiel die weit reichend bekannte Norm SAE J1939 standardisiert ist. Die zur diagnostischen Kommunikation verwendeten Netzwerke können jedoch vollkommen anders sein, zum Beispiel standardisiert durch die Norm SAE J1587, eine K-Leitung, ein LIN (Local Interconnect Network)-Bus und dergleichen, welche hauptsächlich in der Automobilindustrie verwendet werden und spezielle Treiber für physikalische Schichten erfordern.

Außerdem ist die Verbindung zu dem Aktualisierungsoperator eine Einweg-Verbindung mit Ausnahme des Initiierens des Herunterlademodus, gibt es keine Referenz zum Herunterladen des neuen Konfigurationsmoduls, das mit dem heruntergeladenen neuen Code kompatibel ist, und kann das Herunterladen einer neuen Software für eine elektronische Steuereinheit als Nebeneffekt in einem Löschen von notwendigen fahrzeugspezifischen Informationen, beispielsweise vorangehend erfassten fahrzeugspezifischen Daten wie etwa den Versatz bzw. die Regelabweichung von elektromechanischen Sensoren (zum Beispiel Pedalen), resultieren, weil solche Daten in der neuen Konfiguration einen Anfangswert haben können. Daher können einige spezielle Bedienvorgänge vor dem Beginn der normalen Benutzung des Fahrzeugs notwendig sein, wie beispielsweise das Drücken eines Pedals, um einen Installationsoffset eines Winkelsensors zu erfassen. Solche Wechselbeziehungen, oder Interaktionen, Anforderungen von dem Fahrer und Antworten des Fahrers werden, falls erforderlich, in der bekannten Anordnung nicht gehandhabt.

Schließlich gibt es keine Referenz betreffend eine "Selbstaktualisierung", d.h. das Aktualisieren des diagnostischen Softwaremoduls selbst, in der Einrichtung, die zum Aufbauen der diagnostischen Herunterladesitzung verwendet wird, gibt es keine Referenz zum Speichern irgendwelcher von dem Fahrzeug gesammelten Informationen durch beispielsweise Schreiben dieser Daten auf ein beschreibbares Medium, und ist eine diagnostische Echtzeitverbindung zu einer zentralen Datenbank oder Kundendienststelle nicht möglich.

Der Erfindung liegt daher die Aufgabe zugrunde, eine Vorrichtung und ein Verfahren zum Aktualisieren von Softwarekomponenten der in ein Fahrzeug eingebauten elektronischen Steuereinheiten zu schaffen, mittels der die vorgenannten Nachteile und Probleme gelöst werden.

Diese Aufgabe wird durch die kennzeichnenden Merkmale des Vorrichtungsanspruchs 1 sowie durch die kennzeichnenden Merkmale des Verfahrensanspruchs 13 gelöst.

Die Aufgabe der Erfindung wird insbesondere gelöst durch eine Vorrichtung zum Neuprogrammieren einer elektronischen Steuereinheit eines Fahrzeugs, bei der:
- eine Einrichtung vorgesehen ist, die mit einem Peripheriegerät zum Lesen und/oder Beschreiben eines austauschbaren Datenspeichermediums verbunden ist;
- ein austauschbares Datenspeichermedium vorgesehen ist, auf dem zur Aktualisierung der zumindest einen elektronischen Steuereinheit notwendige Softwarekomponenten enthalten sind;
- die Aktualisierungs-Steuereinheit zur Aktualisierung einer Softwarekomponente der zumindest einen elektronischen Steuereinrichtung mit der das Peripheriegerät zum Lesen und/oder Beschreiben des austauschbaren Datenspeichermediums aufweisenden Einrichtung und mit der elektronischen Ziel-Steuereinheit kommuniziert;
- die Aktualisierungs-Steuereinheit sowohl mit dem ersten fahrzeuginternen Kommunikationsnetzwerk als auch dem zweiten fahrzeuginternen Kommunikationsnetzwerk verbunden ist; und
- die Aktualisierungs-Steuereinheit eine separate elektronische Steuereinheit des Fahrzeugs oder in eine funktionsorientierte elektronische Steuereinrichtung integriert und außerhalb der das Peripheriegerät zum Lesen und/oder Beschreiben des austauschbaren Datenspeichermediums aufweisenden Einrichtung angeordnet ist.

Es wird somit eine Vorrichtung in einem Fahrzeug zum Neuprogrammieren einer elektronischen Steuereinheit vorgeschlagen mit einer Einrichtung des Fahrzeugs mit einem Peripheriegerät für ein austauschbares Datenmedium, das zum Lesen oder Beschreiben von austauschbaren Datenspeichermedien verwendbar ist, einem Kommunikationsnetzwerk, das für eine diagnostische Kommunikation verwendbar ist, einem Kommunikationsnetzwerk, das für eine normale, funktionsorientierte Kommunikation verwendet wird, wobei notwendige Informationen zum Ermitteln eines sicheren Zustands des Fahrzeugs in dieser auffindbar sind, Nachrichten an eine Einrichtung mit einer alphanumerischen Anzeige sendbar sind, und Antworten von dem Fahrzeugbediener empfangbar sind, einem austauschbaren, portablen Datenspeichermedium, auf dem die herunterladbaren Softwarekomponenten enthalten sind, und einer elektronischer Aktualisierungs-Steuereinheit des Fahrzeugs, die die Aktualisierung von Softwarekomponenten über ein Diagnoseprotokoll handhabt, wobei sie mit einer das Peripheriegerät für austauschbare Datenspeicher aufweisenden elektronischen Einrichtung und mit einer wenigstens einen funktionsorientierten elektronischen Steuereinheit kommuniziert.

Bevorzugt ist eine Instrumentenanordnung mit einer alphanumerischen Anzeige zur Durchführung einer interaktiven Kommunikation mit einem Fahrzeugbediener mit der zumindest einen elektronischen Steuereinheit verbunden.

Vorteilhaft ist die elektronische Aktualisierungs-Steuereinheit mit einer GSM-Schnittstelle verbunden, die eine diagnostische Fernverbindung über ein GSM-System bereitstellt.

Vorteilhaft ist das austauschbare Datenspeichermedium eine Compact Disc (CD), eine Digital Versatile Disc (DVD), eine austauschbare Festplatte, ein Speicherstift, eine ZIP-Diskette, ein Videoband, eine Diskette oder ein mit einem USB-Anschluss verbindbares USB-Stecklaufwerk.

Auch bevorzugt wird, dass das austauschbare Datenspeichermedium die herunterladbaren Softwarekomponenten und zumindest eines der folgenden enthält:
- eine Liste von verfügbaren und aktuellen Softwareversionen;
- fahrzeugspezifische Informationen;
- eine Aktualisierungsbefehlsdatei.

Die Steuerung des gesamten Aktualisierungsprozesses kann alternativ nicht nur durch eine separate elektronische Steuereinheit durchgeführt werden, sondern kann ebenso in beliebige, in dem Netzwerk existierende elektronische Steuereinheiten integriert werden, um die Produktkosten zu optimieren. Eine derartige Integration kann insbesondere vorteilhaft sein, weil das zugrunde liegende Prinzip an sich und die es implementierende Software im Grunde plattformunabhängig sind, so dass eine Integration desselben zusammen mit anderen Funktionen in ein und dieselbe elektronische Steuereinheit die Netzwerkstruktur des Fahrzeugs vereinfacht und dadurch die Kosten verringert.

Vorteilhaft ist ferner, dass
- das für die diagnostische Kommunikation ausgelegte zweite Kommunikationsnetzwerk in den Wartungsstationen zu Diagnosezwecken verwendbar ist; und
- ein gemeinsames diagnostisches Protokoll zum Kommunizieren mit allen elektronischen Steuereinheiten in dem Fahrzeug bereitgestellt ist.

Darüber hinaus bevorzugt wird, dass das für die funktionsorientierte Kommunikation ausgelegte erste Kommunikationsnetzwerk
- ein Kommunikationsmedium für die zumindest eine funktionsorientierte elektronische Steuereinheit zum Erzielen von Fahrzeugfunktionen bereitstellt, die eine Zusammenarbeit von mehr als einer elektronischen Steuereinheit erfordern;
- von den an der Zusammenarbeit beteiligten elektronischen Steuereinheiten in Übereinstimmung mit einem Normalbetrieb des Fahrzeugs Zustandsinformationen aufnimmt und an diese Befehle ausgibt;
- notwendige Informationen zum Ermitteln, ob der Zustand des Fahrzeugs für einen Herunterlademodus von auf dem austauschbaren Datenspeichermedium enthaltenen Softwarekomponenten sicher ist, bereitstellt; und
- Antworten von dem Fahrzeugbediener entgegennimmt.

In einer vorteilhaften Ausgestaltung sind das erste und das zweite Kommunikationsnetzwerk zwei physikalisch unabhängige Netzwerke.

In diesem Fall ist es möglich, dass die physikalisch unabhängigen Netzwerke drahtlose Netzwerke sind.

In einer alternativen vorteilhaften Ausgestaltung sind das erste und das zweite Kommunikationsnetzwerk physikalisch ein und dasselbe Netzwerk und werden daher die die Aktualisierung von Softwarekomponenten einschließende diagnostische Kommunikation und die funktionsorientierte Kommunikation auf ein und demselben Netzwerk durchgeführt.

Auch in diesem Fall ist es möglich, dass das physikalisch ein und dasselbe Netzwerk ein drahtloses Netzwerk ist.

Zur Implementierung der erfindungsgemäßen Vorrichtung wird ein Aktualisierungsverfahren vorgeschlagen, das von der elektronischen Aktualisierungs-Steuereinheit ausgeführt wird und die folgenden Schritte umfasst:
- Prüfen des Zustands des Fahrzeugs dahingehend, ob der Zustand zum Durchführen eines Herunterladens von Software von dem austauschbaren Datenspeichermedium sicher ist;
- Aufbauen des Diagnosemodus;
- Anfordern von Daten von der Einrichtung mit der Datenspeicherperipherie;
- Auffordern der elektronischen Ziel-Steuereinheit, sich selbst in den Herunterlademodus zu versetzen; und
- Überprüfen, ob der Herunterladevorgang erfolgreich war oder nicht.

Das Aktualisierungsverfahren selbst ist eine eigenständige, plattformunabhängige und von einem Kunden programmierbare Softwarekomponente, welche entwickelt, von Fehlern befreit, getestet und von Fahrzeugherstellern in die elektronische Aktualisierungs-Steuereinheit geladen bzw. heruntergeladen werden kann, und diesen somit ihrem Produkt entsprechend weitestgehende Freiheit zur Anpassung und Optimierung des Aktualisierungsprozesses gibt.

Die elektronische Aktualisierungs-Steuereinheit, die mit dem Kommunikationsnetzwerk des Fahrzeugs verbunden ist und dabei eine diagnostische Verbindung sowie optional einen größeren nicht flüchtigen Speicher aufweist, kann nicht nur zu Zwecken der Softwareaktualisierung, sondern auch für andere Funktionen, wie beispielsweise die Gewinnung von Daten aus dem GPS-Navigationssystem oder das übergreifende Treiberverhalten und dergleichen nutzbar. Diese gesammelten Daten können auch auf einen beschreibbaren Multimedia-Speicher gesichert werden, falls eine Einrichtung mit einer Peripherie für einen austauschbaren Datenspeicher ein solches Schreiben unterstützt. Die Erfindung wird nachstehend anhand bevorzugter Ausführungsbeispiele unter Bezugnahme auf die Zeichnung näher beschrieben. Es zeigen:
Fig. 1 ein Ausführungsbeispiel eines Fahrzeugnetzwerks, das zur Aktualisierung der Software einer elektronischen Steuereinheit mit einer Peripherie zum Zugreifen auf austauschbare Datenspeichermedien ausgelegt ist, wobei angegeben ist, wie die elektronische Steuereinheit einer elektronischen Aktualisierungssteuereinrichtung mit dem Fahrzeugnetzwerk verbunden ist; und
Fig. 2 ein Ablaufdiagramm eines Aktualisierungsprozesses gemäß einem Ausführungsbeispiel.

Zunächst werden einige Grundlagen der Erfindung beschrieben.

Herunterladbare Softwarekomponenten, wie beispielsweise die Haupt-Betriebssoftware, der so genannte Bootlader, die Gerätekonfiguration und so weiter, sind auf einem austauschbaren Datenmedium bzw. Wechseldatenträger enthalten und werden in die eingebundenen elektronischen Steuereinheiten über dasselbe Download- bzw. Herunterladeprotokoll heruntergeladen, das auch in den Kundendienststationen verwendet wird. Darüber hinaus ist es möglich, Daten von den Kommunikationsnetzwerken des Fahrzeugs zu sammeln und die Datenspeicherperipherie oder die Datenspeicher-Peripherieeinrichtungen in die Lage zu versetzen, die gewonnenen Daten, wie beispielsweise Fehlerspeicher der elektronischen Steuereinheiten, gelernte bzw. erfasste Daten, GPS-Streckendaten, Fahrtenschreiber-Geschwindigkeitsdiagramme und so weiter, auf ein beschreibbares Medium zu schreiben. Mit einer GSM-Schnittstelle kann sodann eine Ferndiagnosesitzung ermöglicht werden.

Heutzutage werden mehr und mehr Funktionen in einem Fahrzeug mittels speziellen, funktionsorientierten, d.h. an Funktionen ausgerichteten, elektronischen Steuereinheiten (Electronic Control Units, ECUs) durchgeführt. Diese elektronischen Steuereinheiten enthalten einen geeigneten Microcontroller, welcher eine konfigurierbare Software ausführt, die die verlangten Steuerfunktionen durchführt. Diese Art einer Lösung wird zum beispielsweise Steuern der Kraftstoffeinspritzung in die Brennkraftmaschine verwendet, verbessert die konventionellen Bremsfunktionen mittels ABS, ASR und dergleichen, oder steuert einen Retarder und so weiter.

Nicht nur sicherheitskritische Einrichtungen können solche Software enthalten, sondern auch weniger wichtige Einrichtungen wie etwa eine Klimaanlage, ein GPS-System, eine Scheibenwischanlage und dergleichen.

Diese intelligenten Steuereinheiten sind üblicherweise über ein Kommunikationsmedium (vorwiegend ein CAN-Bus gemäß der Norm SAE J1939, jedoch sind auch andere Lösungen bekannt) miteinander verbunden. Dies erlaubt es, das Leistungsvermögen des Fahrzeugs durch eine Kommunikation zwischen Einrichtungen (beispielsweise einer ASR oder einer Geschwindigkeitsregelung) zu steigern.

Um die Sicherheit zu erhöhen, sind dort physikalisch unabhängige Netzwerksegmente vorgesehen, wo die elektronischen Steuereinheiten derselben sicherheitskritischen Ebene miteinander verbunden sind. Dadurch wird ausgeschlossen, dass zum Beispiel ein Ausfall einer Einrichtung mit niedriger Wichtigkeit den Netzwerkbus blockieren kann und dadurch auch die Kommunikation zwischen sicherheitskritischen Einrichtungen oder Geräten unmöglich macht.

Obwohl derartige eingebettete, in den elektronischen Steuereinheiten ablaufende Software unter extrem strengen Bedingungen entwickelt und getestet wird, kann es dennoch vorkommen, dass sie Fehler enthält, welche erst nach dem Zusammenbau des Fahrzeugs gefunden oder entdeckt werden. Darüber hinaus kann es geschehen, dass Verbesserungen in die Software eingearbeitet werden, die derzeitiger Hardware weitere Funktionen verleiht.

Solche Gründe können einen Austausch einer Softwarekomponente in einem Fahrzeug erforderlich machen.

Dies erfolgt bislang durch Zurückrufen des Fahrzeugs in die Werkstatt, in der eine spezielle diagnostische Einrichtung bzw. ein spezielles Diagnosegerät mit der Kommunikationsleitung der elektronischen Steuereinheit verbunden und sodann das erforderliche Softwaremodul in diese geladen wird.

Dies ist jedoch aufwendig und teuer, da das Fahrzeug, solange es in der Werkstatt steht, seine täglichen Aufgaben nicht erfüllen kann, welches in einem Verdienstausfall für den Eigentümer resultiert, und zudem die Werkstattbenutzung vergütet werden muss.

Die derzeitige Tendenz geht daher dahin, dass mehr und mehr Funktionen, die früher auf eine andere Art und Weise durchgeführt wurden, durch intelligente elektronische Steuereinheiten ersetzt werden, so dass es für die vorhandenen elektronischen Steuereinheiten immer schwieriger wird, ein besseres Leistungsvermögen zu bieten, ohne die Problematik und/oder die Komplexität mechanischer Komponenten zu vergrößern.

Dies führt dazu, dass die in den elektronischen Steuereinheiten eines Fahrzeugs installierte Software zu einer immer wesentlicheren Komponente des Fahrzeugs wird, deren Wartungsbedarf immer bedeutsamer wird. Der Gesamtumfang an Software kann bereits in Megabyte beziffert werden, so dass eine Aktualisierung einer derart großen Codemenge ein schnelles, verlässliches und kostenoptimiertes Verfahren zum Herunterladen von Code erfordert.

Üblicherweise enthalten zum Beispiel alle heutzutage gebauten Lastkraftwagen eine Art von Datenspeicherperipherie, welche dazu geeignet ist, auf ein austauschbares Datenmedium zuzugreifen (beispielsweise Multimediageräte, Bordrechner bzw. Bordcomputer und dergleichen). Diese Einrichtungen sind für gewöhnlich mit einer Kommunikationsleitung des Lastkraftwagens verbunden. Falls dem so ist, wird eine Steuerung der Datenspeicherperipherie über die Kommunikationsleitung, mit der sie verbunden ist, möglich, um eine Datenübertragung (Anfordern eines Datenblocks, Suchen eines Sektors und so weiter) durchzuführen.

Die Aktualisierung jeder elektronischen Steuereinheit kann durch Vorsehen, d.h. Einbauen, einer speziellen "ECU Neuprogrammierungs-Steuerungs-ECU", d.h. einer elektronischen Steuereinheit, die die Neuprogrammierung einer anderen elektronischen Steuereinheit steuert und die nachstehend als "elektronische Aktualisierungs-Steuereinheit" bezeichnet wird, durchgeführt werden.

Die elektronische Aktualisierungs-Steuereinheit steuert die Datenspeicherperipherie über das Kommunikationsnetzwerk, mit dem sie verbunden ist, kann auf die Daten auf dem austauschbaren Datenmedium, das in die Datenspeicherperipherie eingelegt ist, über die Kommunikationsleitung zugreifen, prüft den Fahrzeugzustand, ermittelt, ob sich das Fahrzeug in einem sicheren Zustand für den (relativ langen) Software-Herunterladeprozess befindet, baut diagnostische Verbindungen mit den zu aktualisierenden elektronischen Steuereinheiten auf und lädt die notwendigen Softwaremodule herunter, initiiert spezielle Vorgänge nach der Aktualisierung, soweit diese erforderlich sind, kann eine Ferndiagnosesitzung unter Verwendung einer optionalen GSM-Schnittstelle aufbauen, und kann unter Verwendung ihres eingebauten diagnostischen Softwaremoduls und grundlegenden Befehlen einfache, ungefährliche diagnostische Abfragen über beispielsweise den Bremsbelagverschleiß und dergleichen durchführen.

Nachstehend wird nun die Zeichnung im Einzelnen beschrieben.

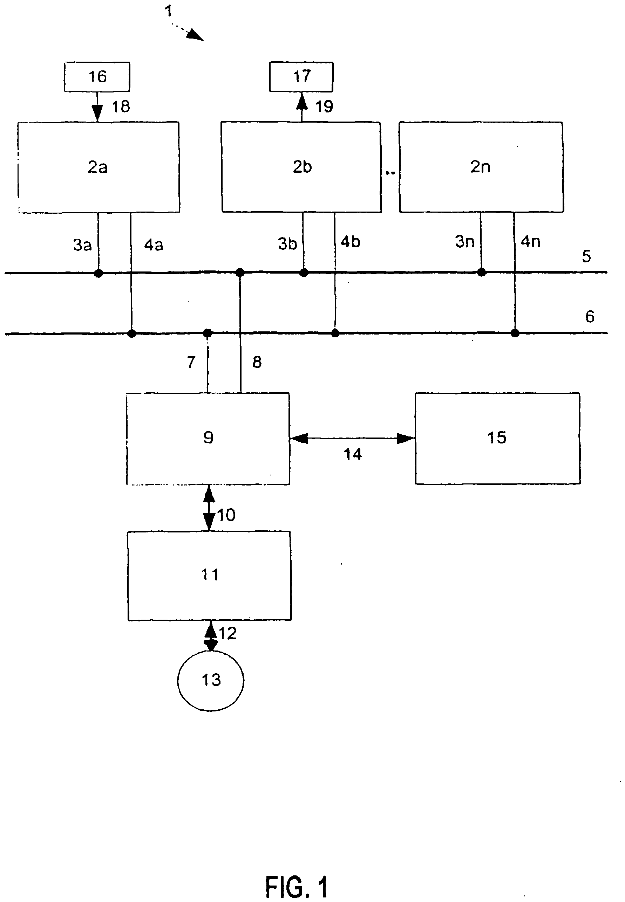

Fig. 1 zeigt vereinfacht ein die elektronische Aktualisierungs-Steuereinheit beinhaltendes Netzwerk gemäß einem Ausführungsbeispiel.

Die Darstellung zeigt ein einfaches Fahrzeugnetzwerk, das aus nur einem Segment besteht. In der Praxis sind aufgrund einer erhöhten Kommunikationssicherheit mehrere Netzwerksegmente in einem Fahrzeug vorhanden. Die sicherheitskritischeren Einrichtungen sind zu einem separaten Netzwerksegment zusammengeschaltet, und weitere, weniger wichtige Einrichtungen sind zu anderen Segmenten verschaltet, so dass auf diese Art und Weise ein Ausfall einer elektronischen Steuereinheit nur deren eigenes Segment, nicht jedoch den gesamten Bus blockieren kann.

Die Vorrichtung 1 umfasst zunächst elektronische Steuereinheiten 2a bis 2n. Diese "normalen" bzw. regulären Steuereinheiten 2a bis 2n sind durch Ausführen einer internen Software, deren Softwarekomponenten irgendwann eine Aktualisierung erfordern könnten, für eine bestimmte Funktion in dem Fahrzeug verantwortlich. Die elektronischen Steuereinheiten 2a bis 2n sind mittels einer Verbindung 4 bzw. Verbindungen 4a bis 4n mit einem Kommunikationsnetzwerk 6 verbunden, welches zur normalen, funktionsbezogenen Kommunikation zwischen den elektronischen Steuereinheiten 2a bis 2n verwendet wird. Ferner sind die elektronischen Steuereinheiten 2a bis 2n mittels einer Verbindung 3 bzw. Verbindungen 3a bis 3n mit einem Kommunikationsnetzwerk 5 verbunden, welches zur diagnostischen Kommunikation zwischen den elektronischen Steuereinheiten 2a bis 2n verwendet wird. Eine elektronische Aktualisierungs-Steuereinheit 9 ist mittels einer Verbindung 7 mit dem Kommunikationsnetzwerk 6 und mittels einer Verbindung 8 mit dem Kommunikationsnetzwerk 5 verbunden. Ferner ist die elektronische Aktualisierungs-Steuereinheit 9 mittels einer Verbindung 10 mit einer Einrichtung 11 mit einer Datenspeicherperipherie verbunden, um Befehle zu senden oder Daten von einem austauschbaren, portablen Datenspeichermedium bzw. Wechseldatenträger 13 abzufragen, welches bzw. welcher mittels einer Verbindung 12 mit der Einrichtung 11 verbunden ist. Diese logische Verbindung 10 kann für den diagnostischen Bus, d.h. das Kommunikationsnetzwerk 5, oder für das normale, funktionsorientierte Kommunikationsnetzwerk 6 den Wert "Wahr" annehmen, oder kann ebenso eine beliebige andere Punkt-zu-Punkt-Verbindung wie beispielsweise RS232, I2C, USB und dergleichen sein. Optional ist die elektronische Aktualisierungs-Steuereinheit 9 mittels einer Verbindung 14 mit einer GSM-Schnittstelle 15 verbunden, um eine Möglichkeit für Ferndiagnosesitzungen zu eröffnen.

Das Kommunikationsnetzwerk 5 wird für eine diagnostische Kommunikation in Übereinstimmung mit dem Diagnoseprotokoll KWP2000 (dem auf dem internationalen Standard ISO 14230-4 basierenden KeyWord Protocol 2000) verwendet. Dieses Netzwerk kann ein CAN-Netzwerk gemäß der Norm SAE J1939, ein Netzwerk gemäß der Norm SAE J1587, eine K-Leitung oder eine LIN (Local Interconnect Network)-Busverbindung sein.

Das Kommunikationsnetzwerk 6 wird für einen funktionsbezogenen Datenaustausch verwendet, der für den normalen Betrieb des Fahrzeugs notwendig ist.

Dieses Kommunikationsnetzwerk bzw. dieser Bus 6 wird von der elektronischen Aktualisierungs-ECU 9 zum Erhalten von Antworten von dem Fahrzeugbediener durch eine Aktivität 16, welche beispielsweise aus dem Drücken eines Schalters oder eines Pedals und dergleichen bestehen kann, und zum Senden von Befehlen und/oder Fragen an den Fahrzeugbediener (Fahrer) mittels Senden von Befehlen an eine elektronische Steuereinheit 2a bis 2n mit einer alphanumerischen Anzeige 17 zum Anzeigen einer Meldung oder mittels Abspielen eines Klangs, falls verfügbar, und dergleichen verwendet.

Die Einrichtung 11 mit der austauschbaren Datenspeicherperipherie ist in dem hier beschriebenen Ausführungsbeispiel ein Multimedia-Unterhaltungsgerät (vorwiegend ein CD- oder DVD-Laufwerk), das ebenfalls bereits Teil des Fahrzeugs ist, jedoch die elektronische Aktualisierungs-Steuereinheit 9 nicht aufweist, und hat ebenso weitere normale Funktionen, wie beispielsweise das Abspielen von Audio-CD's, DVD's, oder das Aktualisieren der Datenbank eines (nicht dargestellten) GPS-Systems.

Der austauschbare Datenspeicher 13 ist ein austauschbares Datenmedium hoher Kapazität, beispielsweise eine CD oder eine DVD, das die herunterladbare Software enthält und das in die Einrichtung 11 einlegbar ist.

Dieses Datenmedium enthält die herunterladbaren Softwaremodule, beispielsweise einen von einer Steuereinheit bzw. einem Controller ausführbaren Code oder eine Konfiguration einer elektronischen Steuereinheit, für alle elektronischen Steuereinheiten 2a bis 2n, die in dem betreffenden Fahrzeug vorhanden sind, eine Liste von Versionsidentifikatoren, die auf dem Aktualisierungs-Datenmedium, d.h. dem austauschbaren Datenspeichermedium 13, enthalten sind, und eine Befehlsdatei für die elektronische Aktualisierungs-Steuereinheit 9, welche beschreibt, was in Übereinstimmung mit einem (noch zu beschreibenden) Aktualisierungsverfahren zu aktualisieren ist. Natürlich kann das austauschbare Datenspeichermedium 13 auch ein neues Aktualisierungsverfahren, etwa einen neuen Aktualisierungsalgorithmus, oder eine neue Software der das Aktualisierungsverfahren ausführenden elektronischen Aktualisierungs-Steuereinheit 9 enthalten.

Die GSM-Schnittstelle 15 ist eine an sich bekannte GSM-Schnittstelle zum Aufbauen von Ferndiagnoseverbindungen zu den elektronischen Steuereinheiten 2a bis 2n.

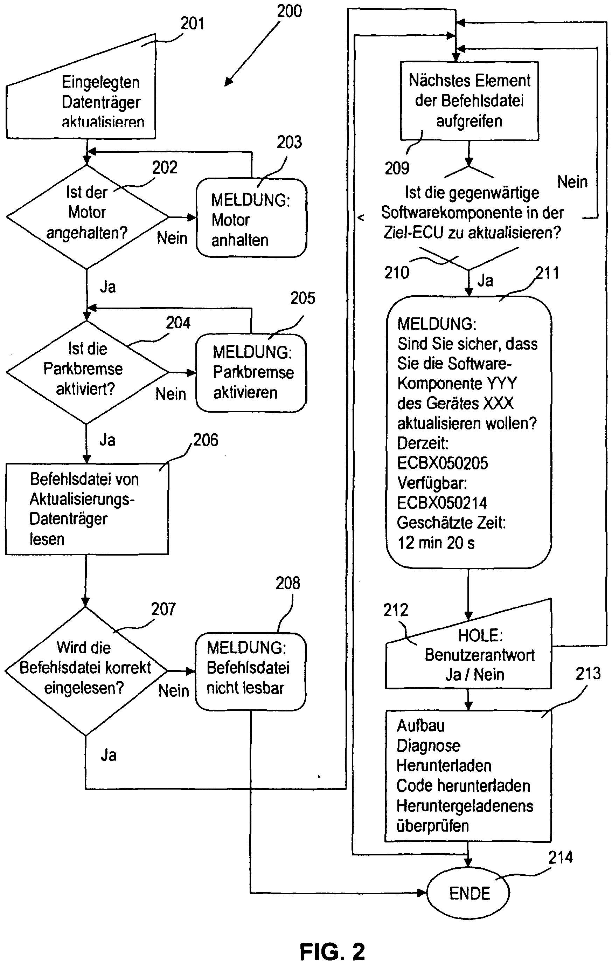

Fig. 2 zeigt ein Ablaufdiagramm eines Aktualisierungsprozesses gemäß einem Ausführungsbeispiel. Über den gesamten, beispielhaften Aktualisierungsalgorithmus hinweg bedeutet das Präfix "MELDUNG:" einen an die elektronische Steuereinheit mit der alphanumerischen Anzeige gesendeten Befehl zum Anzeigen einer Meldung. Auf vergleichbare Art und Weise bedeutet das Präfix "HOLE:" eine Aktivität zum Erhalten einer Antwort von dem Fahrzeugbediener (dem Fahrer).

Die Software der elektronischen Aktualisierungs-Steuereinheit 9 besteht aus zwei Teilen.

Der erste Teil ist eine grundlegende Plattformsoftware einschließlich allgemeiner Funktionen sowie jeder Art von Softwaremodulen, die von Kunden, Fahrzeugtyp, Typ der elektronischen Multimedia-Steuereinheit, Fahrzeug-Netzwerktopologie und dergleichen unabhängig sind. Dieser erste Teil wird hierin nicht näher beschrieben.

Der zweite Teil besteht aus letztendlich programmierbaren Softwarekomponenten wie etwa Konfigurationsparametern der elektronischen Aktualisierungs-Steuereinheit 9, beispielsweise aktiven Netzwerkverbindungen, oder externen Softwarekomponenten, d.h. dem Aktualisierungsverfahren bzw. Aktualisierungsalgorithmus, und optional aktualisierbaren Softwarekomponenten, wie zum Beispiel Treibern für die Datenspeicherperipherie, kundenabhängigen Implementierungen des Diagnoseprotokolls, Treibern für die alphanumerische Anzeige und dergleichen.

Das von dem Hersteller des Fahrzeugs programmierbare Aktualisierungsverfahren 200 ist verantwortlich für das Ermitteln, ob sich das Fahrzeug in einem zum Durchführen der Aktualisierung von Softwarekomponenten, die in der Befehlsdatei auf dem austauschbaren Datenspeichermedium 13 aufgelistet sind, sicheren Zustand befindet, das korrekte Interpretieren der Befehlsdatei des austauschbaren Datenspeichermediums 13, das Aufbauen der diagnostischen Verbindung mit einer elektronischen Ziel-Steuereinheit 2x (wobei x = a, ..., n gemäß Fig. 1), das Herunterladen der Daten in die elektronische Ziel-Steuereinheit 2x, das Beenden der Herunterladesitzung bzw. Herunterladebetriebsart und Veranlassen der elektronischen Ziel-Steuereinheit 2x, zum normalen Betrieb zurückzukehren, das Überprüfen, ob die neue Softwarekomponente in der elektronischen Ziel-Steuereinheit 2x identisch zu den Daten auf dem austauschbaren Datenspeichermedium 13 ist, das Senden von Befehlen und/oder Fragen an die Aktualisierungs-Bedienperson, und das Empfangen von Bedienerantworten von dem Aktualisierungsbediener.

Das in Fig. 2 gezeigte Aktualisierungsverfahren 200 stellt lediglich ein Beispiel eines grundlegend geeigneten Aktualisierungsalgorithmus dar, der die Schlüsselfähigkeiten der elektronischen Aktualisierungs-Steuereinheit 9 nutzt. Da der Aktualisierungsalgorithmus selbst üblicherweise Fahrzeugtypspezifische Elemente enthält, braucht nicht erwähnt zu werden, dass dieser beispielhafte Aktualisierungsalgorithmus lediglich eine Beschreibung zur Darstellung ist, wie eine Implementation der elektronischen Aktualisierungs-Steuereinheit 9 arbeitet.

Ein erster Block des Aktualisierungsalgorithmus beginnt mit einem Schritt 201, in dem die elektronische Aktualisierungs-Steuereinheit 9 erkennt, ob ein austauschbares Datenspeichermedium 13 mit der die austauschbare Datenspeicherperipherie aufweisenden Einrichtung 11 verbunden ist. Dies kann etwa durch eine Zustandsänderungs-Anzeigemeldung der Einrichtung 11 an die elektronische Aktualisierungs-Steuereinheit 9 oder durch periodisches Abfragen der elektronischen Aktualisierungs-Steuereinheit 9 dahingehend, ob sich der Medienverfügbarkeitszustand geändert hat, erfolgen. Dieses Abfragen kann in Abhängigkeit von einem bestimmten Zustand des Fahrzeugs unbedingt oder bedingt ablaufen.

Falls ein neues austauschbares Datenspeichermedium 13 mit der Einrichtung 11 verbunden ist, muss entschieden werden, ob das eingelegte Datenspeichermedium 13 ein geeignetes austauschbares Datenspeichermedium 13 ist, das widerspruchsfreie Daten zum Aktualisieren von Softwarekomponenten in dem Fahrzeug enthält, oder nicht. Dies erfolgt mittels der elektronischen Aktualisierungs-Steuereinheit 9 durch Prüfen des Inhalts des austauschbaren Datenspeichermediums 13.

Ein zweiter Block des Aktualisierungsalgorithmus besteht aus Schritten 202 bis 205. Dieser zweite Block prüft, ob sich das Fahrzeug in einem sicheren Zustand zum Durchführen einer Aktualisierung einer Softwarekomponente befindet. Dies erfolgt durch Sammeln eines Satzes von Fahrzeug-Zustandsparametern aus dem Kommunikationsnetzwerk 6, beispielsweise durch Prüfen, ob der Motor angehalten ist (Schritt 202), und/oder Prüfen, ob die Parkbremse betätigt ist (Schritt 204), und/oder Prüfen, ob sich der Getriebeschalthebel in der Neutral- bzw. Leerlaufstellung befindet (nicht gezeigt), und dergleichen. Lautet das Ergebnis in Schritt 202 "Nein", verzweigt der Ablauf zu Schritt 203, in dem an den Fahrer eine Meldung ausgegeben wird, den Motor anzuhalten, und erfolgt sodann eine erneute Prüfung daraufhin in Schritt 202. Lautet das Ergebnis in Schritt 203 "Ja", schreitet der Ablauf zu Schritt 204 fort.

Lautet das Ergebnis in Schritt 204 "Nein", verzweigt der Ablauf zu Schritt 205, in dem an den Fahrer eine Meldung ausgegeben wird, die Parkbremse zu aktivieren, und erfolgt sodann eine erneute Prüfung daraufhin in Schritt 204. Lautet das Ergebnis in Schritt 204 "Ja", schreitet der Ablauf zu Schritt 206 fort.

Ein dritter Block des Aktualisierungsalgorithmus besteht aus Schritten 206 bis 208. Dieser Block liest die Aktualisierungsbefehlsdatei in Schritt 206 und prüft in Schritt 207, ob diese korrekt und ausführbar ist. Im Einzelnen wird geprüft, ob die Datei unbrauchbar oder beschädigt ist oder nicht, ob die zu aktualisierenden Softwarekomponenten verfügbar sind, und ob die in den Software-Aktualisierungsprozess involvierten elektronischen Ziel-Steuereinheiten in dem Fahrzeug verfügbar sind und für den Herunterladevorgang korrekt arbeiten.

Lautet das Ergebnis der Prüfung in Schritt 207 "Nein", wird in Schritt 208 eine Meldung an den Fahrer dahingehend ausgegeben, dass die Befehlsdatei nicht lesbar ist, und schreitet der Ablauf zu einem Schritt 214 fort, in dem das Aktualisierungsverfahren 200 beendet wird. Lautet das Ergebnis der Prüfung in Schritt 207 "Ja", schreitet der Ablauf zu einem Schritt 209 fort.

Die nächsten drei Blöcke des Aktualisierungsalgorithmus, die wiederholt ausgeführt werden können und aus Schritten 209 bis 213 bestehen, führen die Aktualisierung einer Softwarekomponente in einer elektronischen Ziel-Steuereinheit 2x (einer der elektronischen Steuereinheiten 2a bis 2n) durch.

Ein vierter Block mit den Schritten 209 bis 210 besteht aus einer automatischen Prüfung der Versionen der gegenwärtigen Softwarekomponente in der elektronischen Ziel-Steuereinheit 2x und der entsprechenden neuen, auf dem austauschbaren Datenspeichermedium 13 verfügbaren Softwarekomponente. Mit den beiden bekannten Versionsidentifikatoren entscheidet die elektronische Aktualisierungs-Steuereinheit 9, ob diese Softwarekomponente zu aktualisieren ist oder nicht. Im Einzelnen wird in Schritt 209 das jeweils nächste Listenelement in der Aktualisierungsbefehlsdatei auf dem austauschbaren Datenspeichermedium 13 aufgegriffen, und wird in Schritt 210 geprüft, ob die diesem Listenelement entsprechende Softwarekomponente in der elektronischen Ziel-Steuereinheit 2x zu aktualisieren ist oder nicht. Lautet das Ergebnis der Prüfung "Nein", kehrt der Ablauf zu Schritt 209 zurück, um das nächste Listenelement aufzugreifen. Lautet das Ergebnis der Prüfung "Ja", schreitet der Ablauf zu einem Schritt 211 fort.

Ein fünfter Block, der aus den Schritten 211 bis 212 besteht, erzeugt in Schritt 211 eine Abfrage an den Fahrzeugbediener, ob das Fahrzeug für die Durchführung einer in etwa die angezeigte, geschätzte Zeit dauernden Aktualisierung einer Softwarekomponente bereit ist, und fordert in Schritt 212 eine entsprechende Antwort von dem Fahrer an.

Falls die Antwort in Schritt 212 "Ja" lautet, wird ein sechster Block ausgeführt. Falls die Antwort "Nein" lautet, wird der gegenwärtige Eintrag in der Aktualisierungsbefehlsdatei übersprungen, kehrt der Ablauf zu Schritt 209 zurück, und wird beginnend mit dem vierten Block erneut der vorstehend beschriebene Ablauf mit dem jeweils nächsten Element der Aktualisierungsbefehlsdatei ausgeführt.

Der sechste Block, bestehend aus dem Schritt 213, ist die Schlüsselaktivität der elektronische Aktualisierungs-Steuereinheit 9. In Schritt 213 wird die diagnostische Herunterladesitzung mit der elektronischen Ziel-Steuereinheit 2x aufgebaut, und wird die neue Softwarekomponente heruntergeladen und überprüft.

Schließlich wird in einem Schritt 214 das Aktualisierungsverfahren 200 beendet und die elektronische Ziel-Steuereinheit 2x in den normalen Betrieb zurückgeschaltet.

In Übereinstimmung mit der vorangehenden Beschreibung eines bevorzugten Ausführungsbeispiels stellt die Erfindung die nachstehenden Lösungen und Abhilfen der Nachteile bekannter Anordnungen bereit.

Die Handhabung und Verwaltung des gesamten Softwarekomponenten-Aktualisierungsprozesses sowie sämtlicher nachfolgender Funktionen (Prüfen des Fahrzeugzustands, Schnittstelle zu dem Fahrzeugbediener und dergleichen) erfolgt durch eine separate elektronische Steuereinheit auf bzw. in dem Fahrzeug, so dass daher alle Probleme des Verschmelzens von Multimedia und von mit der Fahrzeugdiagnose verbundenen Softwarefunktionen sowie von Hardwarekomponenten in einer Einheit beseitigt sind.

Durch Nutzen des Vorteils einer separaten elektronischen Aktualisierungs-Steuereinheit ist es einfach, alle bekannten Schaltkreise für physikalische Schichten und deren Treibersoftware, die in der Fahrzeugindustrie verbreitet sind, wie beispielsweise CAN J1939, CAN ISO11992, SAE J1587, K-Leitung, LIN-Bus und dergleichen, in eine elektronische Steuereinheit zu integrieren.

Die Verbindung zu dem Fahrer ist eine interaktive Verbindung, so dass daher der Fahrzeugbediener den Betriebsablauf der elektronischen Aktualisierungs-Steuereinheit beeinflussen kann, auf an ihn gesendete Fragen antworten kann, zufällige Unterbrechungen des Herunterladens handhaben kann, und so weiter.

Es wird nicht nur die von einer elektronischen Steuereinheit ausgeführte Hauptbetriebssoftware bedient, sondern es können auch alle nachfolgenden, für deren Betrieb notwendigen Softwaremodule, wie beispielsweise die Konfiguration der elektronischen Steuereinheit, Software einer eingebauten, überwachenden Steuereinrichtung, der an den normalen Funktionen nicht Anteil nimmt, erfasste Daten und dergleichen, heruntergeladen werden.

Nachfolgende Betriebsabläufe nach dem Herunterladen einer neuen Konfiguration einer elektronischen Steuereinheit können ebenfalls durchgeführt werden, und der Fahrer kann darauf ansprechen, ob der angeforderte Betriebsablauf erfolgt ist.

Die Softwarekomponenten der elektronischen Aktualisierungs-Steuereinheit selbst können ebenfalls erweitert und verbessert werden.

Da die elektronische Aktualisierungs-Steuereinheit mit der normalen Kommunikationsleitung des Fahrzeugs (vgl. das Element B in Fig. 1) verbunden ist, kann sie zum Sammeln bestimmter Daten in Übereinstimmung mit wahlfrei spezifizierten Gesichtspunkten genutzt werden. Diese Daten können nach Erreichen eines bestimmten Umfangs sodann mittels einem beschreibbaren Datenmedium gespeichert oder über die optional angebundene GSM-Schnittstelle an einen zentralen Datenbank-Server gesendet werden.

Die optional angebundene GSM-Schnittstelle ermöglicht diagnostische Verbindungen oder Datenübertragungen.

Schließlich erfolgt die Prüfung des für die Herunterladesitzung sicheren Fahrzeugzustands unter Einbeziehung des Zustands der Betriebsbremsen und der Parkbremse auf detailliertere Art und Weise.

### Bezugszeichenliste (Fig. 1)

- 1: Vorrichtung
- 2a bis 2n: Ziel-ECU
- 3a bis 3n: Verbindung
- 4a bis 4n: Verbindung
- 5: Kommunikationsnetzwerk
- 6: Kommunikationsnetzwerk
- 7: Verbindung
- 8: Verbindung
- 9: Aktualisierungs-ECU
- 10: Verbindung
- 11: Einrichtung
- 12: Verbindung
- 13: austauschbares Datenspeichermedium
- 14: Verbindung
- 15: GSM-Schnittstelle
- 16: Aktivitätselement
- 17: Alphanumerische Anzeige
- 18: Verbindung
- 19: Verbindung

## Patentansprüche

1. Vorrichtung zum Neuprogrammieren einer elektronischen Steuereinheit eines Fahrzeugs, beinhaltend:
- zumindest eine funktionsorientierte elektronische Steuereinheit (2a bis 2n) zur Steuerung von Betriebszuständen und Ausgabe-/Eingabe-Einrichtungen des Fahrzeugs;
- ein erstes fahrzeuginternes Kommunikationsnetzwerk (6) zur Durchführung einer funktionsorientierten Kommunikation in dem Fahrzeug, an welches die zumindest eine funktionsorientierte elektronische Steuereinheit (2a bis 2n) angebunden ist;
- eine elektronische Aktualisierungs-Steuereinheit (9) zur Durchführung einer Aktualisierung von Softwarekomponenten der zumindest einen funktionsorientierten Steuereinheit (2a bis 2n) über ein vorbestimmtes Diagnoseprotokoll;
- eine Einrichtung (11), die mit einem Peripheriegerät zum Lesen und/oder Beschreiben eines austauschbaren Datenspeichermediums (13) verbunden ist;
- ein austauschbares Datenspeichermedium (13) vorgesehen ist, auf dem zur Aktualisierung der zumindest einen elektronischen Steuereinheit (2a bis 2n) notwendige Softwarekomponenten enthalten sind; wobei
- die Aktualisierungs-Steuereinheit (9) zur Aktualisierung einer Softwarekomponente der zumindest einen elektronischen Steuereinrichtung (2a bis 2n) mit der das Peripheriegerät zum Lesen und/oder Beschreiben des austauschbaren Datenspeichermediums (13) aufweisenden Einrichtung (11) und mit der zumindest einen funktionsorientierten elektronischen Steuereinrichtung (2a bis 2n) kommuniziert,
**dadurch gekennzeichnet, dass**
- ein zweites fahrzeuginternes Kommunikationsnetzwerk (5) zur Durchführung einer diagnostischen Kommunikation mit dem Fahrzeug und der elektronischen Aktualisierungs-Steuereinheit (9) vorgesehen ist, welches die zumindest eine funktionsorientierte elektronische Steuereinheit (2a bis 2n) und die elektronische Aktualisierungs-Steuereinheit (9) verbindet,
- die Aktualisierungs-Steuereinheit (9) sowohl mit dem ersten fahrzeuginternen Kommunikationsnetzwerk (6) als auch dem zweiten fahrzeuginternen Kommunikationsnetzwerk (5) verbunden ist; und
- die Aktualisierungs-Steuereinheit (9) eine separate elektronische Steuereinheit des Fahrzeugs oder in eine funktionsorientierte elektronische Steuereinrichtung (2a bis 2n) integriert und außerhalb der das Peripheriegerät zum Lesen und/oder Beschreiben des austauschbaren Datenspeichermediums (13) aufweisenden Einrichtung (11) angeordnet ist.

2. Vorrichtung nach Anspruch 1, **dadurch gekennzeichnet, dass** eine Instrumentenanordnung mit einer alphanumerischen Anzeige (17) zur Durchführung einer interaktiven Kommunikation mit einem Fahrzeugbediener mit der zumindest einen elektronischen Steuereinheit (2a bis 2n) verbunden ist.

3. Vorrichtung nach Anspruch 1, **dadurch gekennzeichnet, dass** die elektronische Aktualisierungs-Steuereinheit (9) mit einer GSM-Schnittstelle (14, 15) verbunden ist, die eine diagnostische Fernverbindung über ein GSM-System bereitstellt.

4. Vorrichtung nach Anspruch 1, **dadurch gekennzeichnet, dass** die mit einem Peripheriegerät für austauschbare Datenspeichermedien (13) verbundene Einrichtung (11) fest in das Fahrzeug eingebaut und eine der nachstehenden ist:
- ein Unterhaltungsgerät, bei dem das Peripheriegerät für austauschbare Datenspeichermedien (13) zum Abspielen und/oder Aufzeichnen von multimedialen Daten verwendet wird;
- ein Bordrechner, der eine Vielzahl von Hilfsfunktionen bereitstellt, mit einem Peripheriegerät für austauschbare Datenspeichermedien (13), das in der Lage ist, die austauschbaren Datenspeichermedien (13) zu lesen und/oder zu beschreiben;
- eine Datenspeicherperipherie eines GPS-Systems, die zum Zugreifen auf oder Aktualisieren dessen Datenbank verwendbar ist.

5. Vorrichtung nach Anspruch 1, **dadurch gekennzeichnet, dass** das austauschbare Datenspeichermedium (13) eine Compact Disc, eine Digital Versatile Disc, eine austauschbare Festplatte, ein Speicherstift, eine ZIP-Diskette, ein Videoband, eine Diskette oder ein mit einem USB-Anschluß verbindbares USB-Stecklaufwerk ist.

6. Vorrichtung nach Anspruch 1, **dadurch gekennzeichnet, dass** das austauschbare Datenspeichermedium (13) die herunterladbaren Softwarekomponenten und zumindest eines der folgenden enthält:
- eine Liste von verfügbaren und aktuellen Softwareversionen;
- fahrzeugspezifische Informationen;
- eine Aktualisierungsbefehlsdatei.

7. Vorrichtung nach Anspruch 1, **dadurch gekennzeichnet, dass**
- das für die diagnostische Kommunikation ausgelegte zweite Kommunikationsnetzwerk (5) in den Wartungsstationen zu Diagnosezwecken verwendbar ist; und
- ein gemeinsames diagnostisches Protokoll zum Kommunizieren mit allen elektronischen Steuereinheiten (2a bis 2n, 9) in dem Fahrzeug bereitgestellt ist.

8. Vorrichtung nach Anspruch 1, **dadurch gekennzeichnet, dass** das für die funktionsorientierte Kommunikation ausgelegte erste Kommunikationsnetzwerk (6)
- ein Kommunikationsmedium für die zumindest eine funktionsorientierte elektronische Steuereinheit (2a bis 2n) zum Erzielen von Fahrzeugfunktionen bereitstellt, die eine Zusammenarbeit von mehr als einer elektronischen Steuereinheit (2a bis 2n) erfordern;
- von den an der Zusammenarbeit beteiligten elektronischen Steuereinheiten (2a bis 2n) in Übereinstimmung mit einem Normalbetrieb des Fahrzeugs Zustandsinformationen aufnimmt und an diese Befehle ausgibt;
- notwendige Informationen zum Ermitteln, ob der Zustand des Fahrzeugs für einen Herunterlademodus von auf dem austauschbaren Datenspeichermedium (13) enthaltenen Softwarekomponenten sicher ist, bereitstellt; und
- Antworten von dem Fahrzeugbediener entgegennimmt.

9. Vorrichtung nach Anspruch 7 und 8, **dadurch gekennzeichnet, dass** das erste und das zweite Kommunikationsnetzwerk (5, 6) zwei physikalisch unabhängige Netzwerke sind.

10. Vorrichtung nach Anspruch 9, **dadurch gekennzeichnet, dass** die physikalisch unabhängigen Netzwerke (5, 6) drahtlose Netzwerke sind.

11. Vorrichtung nach Anspruch 7 und 8, **dadurch gekennzeichnet, dass** das erste und das zweite Kommunikationsnetzwerk (6, 5) physikalisch ein und dasselbe Netzwerk sind und daher die die Aktualisierung von Softwarekomponenten einschließende diagnostische Kommunikation und die funktionsorientierte Kommunikation auf ein und demselben Netzwerk durchgeführt werden.

12. Vorrichtung nach Anspruch 11, **dadurch gekennzeichnet, dass** das physikalisch ein und dasselbe Netzwerk ein drahtloses Netzwerk ist.

13. Aktualisierungsverfahren für den Betrieb der Vorrichtung nach einem der vorangehenden Ansprüche 1 bis 12, **dadurch gekennzeichnet, dass** das Verfahren von der elektronischen Aktualisierungs-Steuereinheit (9) ausgeführt wird und die folgenden Schritte umfasst:
- Prüfen des Zustands des Fahrzeugs dahingehend, ob der Zustand zum Durchführen eines Herunterladens von Software von dem austauschbaren Datenspeichermedium (13) sicher ist;
- Aufbauen des Diagnosemodus;
- Anfordern von Daten von der Einrichtung (11) mit der Datenspeicherperipherie;
- Auffordern der funktionsorientierten elektronischen Steuereinheit (2a bis 2n), sich selbst in den Herunterlademodus zu versetzen; und
- Überprüfen, ob der Herunterladevorgang erfolgreich war oder nicht.

## Claims

1. Device for reprogramming an electronic vehicle control unit, comprising:
- at least one function-oriented electronic control unit (2a to 2n) for controlling operating states and input/output means of the vehicle;
- a first vehicle-internal communication network (6) for performing a function-oriented communication operation in the vehicle, to which said at least one function-oriented electronic control unit (2a to 2n) is linked;
- an electronic updating control unit (9) for performing an operation for updating software components of said at least one function-oriented control unit (2a to 2n) via a predetermined diagnostic log;
- a means (11) connected to a peripheral device for reading and/or writing in an exchangeable data storage medium (13);
- an exchangeable data storage medium (13) is provided on which software components are contained which are necessary for updating said at least one electronic control unit (2a to 2n); wherein
- said updating control unit (9) for updating a software component of said at least one electronic control means (2a to 2n) is in communication with said means (11) including said peripheral device for reading and/or writing in said exchangeable data storing medium (13) and with said at least one function-oriented electronic control unit (2a to 2n),
**characterised in that**
- a second vehicle-internal communication network (5) is provided for performing a diagnostic communication with the vehicle and said electronic updating control unit (9), which connects said at least one function-oriented electronic control unit (2a to 2n) and said electronic updating control unit (9),
- said updating control unit (9) is connected to both said first vehicle-internal communication network (6) and said second vehicle-internal communication network (5); and
- said updating control unit (9) is integrated into a separate electronic control unit of the vehicle or into a function-oriented electronic control unit (2a to 2n) and is disposed outside of said means (11) including said peripheral device for reading and/or writing into said exchangeable data storage medium (13).

2. Device according to Claim 1, **characterised in that** an instrument array with an alphanumerical display (17) is connected to said at least one electronic control unit (2a to 2n) for performing an interactive communication with a vehicle operator.

3. Device according to Claim 1, **characterised in that** said electronic updating control unit (9) is connected to a GSM interface (14, 15) that provides a diagnostic remote connection via a GSM system.

4. Device according to Claim 1, **characterised in that** said means (11) connected to a peripheral device for exchangeable data storage media (13) is fixedly installed in the vehicle and is one of the following units:
- an entertainment unit wherein the peripheral unit for exchangeable data storage media (13) is used for reproducing and/or recording multimedia data;
- an on-board computer providing a plurality of auxiliary functions, including a peripheral device for exchangeable data storage media (13), which is in the position to read and/or to write onto exchangeable data storage media (13);
- a data storage peripheral unit of a GPS system that is usable for access to or for updating the data base of the system.

5. Device according to Claim 1, **characterised in that** said exchangeable data storage medium (13) is a compact disc, a digital versatile disc, an exchangeable hard disc, a memory stick, a ZIP diskette, a video tape, a diskette or a USB plug-in drive adapted to be connected to a USB port.

6. Device according to Claim 1, **characterised in that** said exchangeable data storage medium (13) contains the software components that can be downloaded and at least one of the following items:
- a list of available and current software versions;
- vehicle-specific information;
- an updating command file.

7. Device according to Claim 1, **characterised in that**
- said second communication network (5) designed for the diagnostic communication is capable of being used for diagnosis purposes in the maintenance stations; and
- a common diagnostic log is made available for communication with all electronic control units (2a to 2n, 9) in the vehicle.

8. Device according to Claim 1, **characterised in that** said first communication network (6) designed for function-oriented communication
- provides a communication medium for said at least one function-oriented electronic control unit (2a to 2n) for achieving vehicle functions that require interaction of more units than one electronic control unit (2a to 2n);
- receives condition information from the electronic control units (2a to 2n) participating in the interaction and outputs commands to these control units in correspondence with a regular operation of the vehicle;
- provides necessary information for determination whether the condition of the vehicle is safe for a down-load mode of software components contained on said exchangeable data storage medium (13); and
- receives responses from said vehicle operator.

9. Device according to Claims 7 and 8, **characterised in that** said first and said second communication networks (5, 6) are two physically independent networks.

10. Device according to Claim 9, **characterised in that** said physically independent networks (5, 6) are wireless networks.

11. Device according to Claims 7 and 8, **characterised in that** said first and said second communication networks (5, 6) are physically one and the same network and that therefore the operations of diagnostic communication, which includes updating software components, and the function-oriented communication are carried out on one and the same network.

12. Device according to Claim 11, **characterised in that** said physically one and the same network is a wireless network.

13. Updating method for the operation of the device according to any of the preceding Claims 1 to 12, **characterised in that** the method is carried out by said electronic updating control unit (9) and includes the following steps:
- checking the condition of the vehicle for establishing whether the condition is secure for performing an operation of downloading software from said exchangeable data storage medium (13);
- establishing the diagnosis mode;
- requesting data from said means (11) including said data storage periphery;
- demanding that the function-oriented electronic control units (2a to 2n) set themselves into the download mode; and
- verifying whether the download operation was successful or unsuccessful.

## Revendications

1. Dispositif de reprogrammation une unité électronique de commande de véhicule, comprenant:
- au moins une seule unité électronique de commande orientée en vue de fonction (2a à 2n) afin de commander des états de fonctionnement et des moyens d'entrée/sortie du véhicule;
- un premier réseau de communication (6) à l'intérieur du véhicule afin de réaliser une opération de communication orientée en vue de fonction dans le véhicule, auquel ladite au moins seule unité électronique de commande orientée en vue de fonction (2a à 2n) est reliée;
- an unité électronique de commande d'actualisation (9) à réaliser une opération de mise à jour des composants de logiciel de ladite au moins seule unité de commande orienté en vue de fonction (2a à 2n) via un protocole de diagnostic prédéterminé;
- un moyen (11) relié à un dispositif périphérique pour la lecture et/ou écriture sur un médium échangeable de stockage des données (13);
- un médium échangeable de stockage des données (13) est disposé, sur lequel des composants de logiciel sont contenus, qui sont requis afin de mettre à jour ladite au moins seule unité électronique de commande (2a à 2n); dans lequel
- ladite unité de commande d'actualisation (9) à mettre à jour un composant de logiciel dudit au moins seul moyen électronique de commande (2a à 2n) se trouve en communication avec ledit moyen (11) renfermant ledit dispositif périphérique pour la lecture et/ou écriture dans ledit médium échangeable de stockage des données (13) et avec ladite au moins seule unité électronique de commande orientée en vue de fonction (2a à 2n),
**caractérisé en ce**
- **qu'**un deuxième réseau de communication (5) à l'intérieur du véhicule est formé afin de réaliser une communication de diagnostic avec le véhicule et ladite unité électronique de commande d'actualisation (9), qui relie ladite au moins seule unité électronique de commande orientée en vue de fonction (2a à 2n) et ladite unité électronique de commande d'actualisation (9),
- **que** ladite unité de commande d'actualisation (9) est reliée audit premier réseau de communication (6) à l'intérieur du véhicule et ledit deuxième réseau de communication (5) à l'intérieur du véhicule; et
- **que** ladite unité de commande d'actualisation (9) est intégrée dans une unité électronique de commande du véhicule séparée ou dans une unité électronique de commande orientée en vue de fonction (2a à 2n) et est disposée à l'extérieur dudit moyen (11) renfermant ledit dispositif périphérique pour la lecture et/ou l'écriture dans ledit médium échangeable de stockage des données (13).

2. Dispositif selon la revendication 1, **caractérisé en ce qu'**un arrangement des instruments à un écran alphanumérique (17) est relié à ladite au moins seule unité électronique de commande (2a à 2n) afin de réaliser une communication interactive avec un chauffeur du véhicule.

3. Dispositif selon la revendication 1, **caractérisé en ce que** ladite unité électronique de commande d'actualisation (9) est relié à une interface GSM (14, 15) qui assure une connexion de à distance via un système GSM.

4. Dispositif selon la revendication 1, **caractérisé en ce que** ledit moyen (11) relié à un dispositif périphérique pour des mediums échangeables de stockage des données (13) est installé et fixé dans le véhicule et est une des unités suivantes:
- une unité de divertissement, dans laquelle ladite unité périphérique pour des mediums échangeables de stockage des données (13) est utilise afin de reproduire et/ou enregistrer des données multimédia;
- un ordinateur de bord, qui offre une pluralité des fonctions auxiliaires, y compris un dispositif périphérique pour des mediums échangeables de stockage des données (13), qui est capable de lire et/ou écrire dans des médiums échangeables de stockage des données (13);
- une unité périphérique de stockage des données d'un système GPS, qui se prête à l'accès à une base des données ou à mettre à jour la base des données du système.

5. Dispositif selon la revendication 1, **caractérisé en ce que** ledit médium échangeable de stockage des données (13) est un disque compact, un disque numérique polyvalent (DVD), un disque dur échangeable, une clé de mémoire, une disquette ZIP, une bande vidéo, une disquette ou une unité d'entraînement enfichable USB à relier à un connecteur USB.

6. Dispositif selon la revendication 1, **caractérisé en ce que** ledit médium échangeable de stockage des données (13) contient les composants de logiciel, qu'on peut télécharger et au moins un des éléments suivants:
- une liste des versions de logiciel disponible et actuel;
- des informations spécifiques du véhicule;
- un fiche de commandes d'actualisation.

7. Dispositif selon la revendication 1, **caractérisé en ce**
- **que** ledit deuxième réseau de communication (5), qui est conçu pour la communication de diagnostic, est apte à être utilisé à des fins de diagnostic dans des postes de maintenance; et
- **qu'**un protocole de diagnostic joint est rendu disponible pour la communication avec toutes les unités électronique de commande (2a à 2n, 9) dans le véhicule.

8. Dispositif selon la revendication 1, **caractérisé en ce que** ledit premier réseau de communication (6), qui est conçu pour la communication orientée en vue de fonction,
- constitue un médium de communication pour ladite au moins seule unité électronique de commande orientée en vue de fonction (2a à 2n) afin d'achever des fonctions du véhicule, qui requièrent l'interaction parmi plus unités qu'une seule unité électronique de commande (2a à 2n);
- reçoit des informations d'état à partir des unités électroniques de commande (2a à 2n), qui participent à l'interaction et sort des commandes à ces unités de commande en correspondance avec une opération régulière du véhicule;
- fournit des informations nécessaires pour l'établissement, si l'état du véhicule pour un mode de télécharge des composants de logiciel, qui sont contenus sur ledit médium échangeable de stockage des données (13), est sûr; et
- reçoit des réponses du chauffeur du véhicule.

9. Dispositif selon les revendications 7 et 8, **caractérisé en ce que** lesdits premier et deuxième réseaux de communication (5, 6) sont deux réseaux indépendants en vue de physique.

10. Dispositif selon la revendication 9, **caractérisé en ce que** lesdits réseaux indépendants en vue de physique (5, 6) sont des réseaux sans fil.

11. Dispositif selon les revendications 7 et 8, **caractérisé en ce que** lesdits premier et deuxième réseaux de communication (5, 6) constitue un réseau physiquement seul, et **en ce qu'**ainsi des opérations de communication de diagnostic, qui renferme la mise à jour des composants de logiciel, et la communication orientée en vue de fonction sont réalisées sur le même réseau.

12. Dispositif selon la revendication 11, **caractérisé en ce que** ledit réseau physiquement seul est un réseau sans fil.

13. Procédé de mise à jour pour l'opération du dispositif selon une quelconque des revendications précédentes 1 à 12, **caractérisé en ce que** le procédé est réalisé par ladite unité électronique de commande d'actualisation (9) et renferme les étapes suivantes :
- vérification de l'état du véhicule afin d'établir, si l'état est sûr pour la réalisation d'une opération de télécharge de logiciel dudit médium échangeable de stockage des données (13);
- établissement du mode de diagnostic;
- requête des données dudit moyen (11) renfermant ladite périphérie de stockage des données;
- demande, que les unités électroniques de commande orientée en vue de fonction (2a à 2n) placent elles-mêmes en mode de télécharge; et
- vérification, si l'opération de télécharge était réalisée avec ou sans succès.
